# EUROPÄISCHE PATENTSCHRIFT

(11) **EP 0 631 174 B1**
(45) Veröffentlichungstag und Bekanntmachung des Hinweises auf die Patenterteilung: **08.04.1998**
(21) Anmeldenummer: 93109835.4
(22) Anmeldetag: 20.06.1993
(51) Int. Cl.: G03B 21/56

(54) **Klappbare Gro leinwand für Freilichtaufführungen**
Tiltable large-scale screen for open-air presentations
Ecran géant à charnière pour représentations en plein air

(43) Veröffentlichungstag der Anmeldung: 28.12.1994
(73) Patentinhaber: Cinerent Open Air AG, CH-8702 Zollikon (CH)
(72) Erfinder: Schlienger, Albert, CH-8523 Hagenbuch (CH)
(74) Vertreter: Blum, Rudolf Emil Ernst

(56) Entgegenhaltungen:
- US-A- 1 798 078
- US-A- 1 832 821
- US-A- 3 729 109
- US-A- 4 498 734

## Beschreibung

Die Erfindung betrifft eine Projektionswand gemäss dem Oberbegriff des ersten Patentanspruchs.

Filmvorführungen im Freien haben in den letzten Jahren grosse Beliebtheit erlangt. Insbesondere bei Filmfestivals und bei Sommervorführugen werden dabei einem grossen Publikum Filme vorgeführt. Dazu wird eine entsprechend grosse Leinwand benötigt. Diese Leinwand sollte einfach montierbar und trotzdem sturm- und wetterfest sein.

Hierzu kann z.B. eine konventionelle Leinwand verwendet werden, die an einem eigens dazu aufgestellen Baugerüst montiert wird. In diesem Falle ist es jedoch nötig, das Baugerüst so stabil auszulegen, dass es selbst starken Stürmen trotzen kann. Dies ist sehr schwierig, da insbesondere bei grossen Leinwänden mit einer Fläche von mehreren hundert Quadratmetern enorme Windkräfte auftreten können.

Deshalb wird in der Regel eine Lösung gewählt, bei welcher die Leinwand abgesenkt werden kann. Dazu wird die Leinwand auf einen Rahmen gespannt und am unteren Ende kippbar im Boden verankert. Dann kann sie mit Seilen, die an ihrem oberen Teil angreifen, an das Gerüst oder geeignete Pfosten in einer Klappbewegung hochgezogen werden. Hierbei ergeben sich aber Probleme, da die Seile nur auf Zug und nicht auf Druck belastet werden können. Soll zum Beispiel die Wand wieder heruntergeklappt werden, so kann ein starker Wind, welcher auf die nach unten zu klappende Seite der Wand drückt, dies verhindern.

Ausserdem werden bei den bekannten Lösungen aufwendige Verankerungen oder ein grosses Balastgewicht für Gerüste resp. Tragepfosten benötigt, damit diese bei starkem Wind nicht umgeworfen werden.

In US-A-1,832,821 wird eine Projektionswand offenbart, die schwenkbar auf einem Fahrzeug angeordnet ist und auf das Fahrzeug heruntergeklappt werden kann. Auch hier kann die Wand durch starke Winde, insbesondere von vorne, beschädigt werden. Ausserdem ist die Konstruktion für grössere Wände unpraktisch.

In US-A-3,729,109 wird eine Projektionswand beschrieben, die an sich für Freiluftaufführungen geeignet wäre, jedoch auf eine Befestigungswand angewiesen ist. Es ist nicht ersichtlich, wie diese Konstruktion ohne Befestigungswand insbesondere eine grössere Projektionsfläche haltern könnte.

Deshalb stellt sich die Aufgabe, eine Projektionswand der oben erwähnten Art bereitzustellen, die diese Nachteile nicht aufweist. Insbesondere soll die Projektionswand einfach aufzustellen und sturmsicher sein, aber keine aufwendige Verankerung benötigen.

Diese Aufgabe wird durch die Projektionswand mit den Merkmalen gemäss dem ersten Patentanspruch gelöst.

Da die Projektionswand in beide Drehrichtungen der Kippachse verkippbar ist, kann sie sowohl einem Wind von vorne als auch einem Wind von hinten ausweichen, was die maximal aufzunehmenden Windkräfte reduziert. Ausserdem kann sie unter einem optimalen Winkel zum Projektionsgerät ausgerichtet werden.

Der mindestens eine Träger hat einen oberen Trägerteil und einen auf dem Boden ruhenden Standteil. Der Trägerteil hält den Schirmteil und ist gegenüber dem Standteil verkippbar. Dadurch ist es möglich, die Leinwand bis praktisch auf den Boden herunterzuklappen. Dies ist zur Sturmsicherung, aber auch zur Montage und Wartung der Vorrichtung äusserst vorteilhaft. Zur Verminderung der Drehmomente und Kräfte beim Kippen des Schirmteils wird dabei die Kippachse vorzugsweise nicht durch die untere oder obere Schirmkante gelegt sondern ist gegen deren Mitte hin versetzt.

Vorzugsweise ist die Wand nach vorne und hinten bis mindestens in eine Horizontallage abklappbar, um bei einem Sturm dem Wind keine Angriffsfläche zu bieten.

Wird die Stützkonstruktion für die Leinwand so ausgeführt, dass sie entlang der Kippachse einen torsionsfesten Achsenträger aufweist, so können die übrigen Elemente der Stützkonstruktion sehr leicht aufgebaut werden. Insbesondere bei tief liegender Drehachse wird dadurch der Schwerpunkt der Wand nach unten verlagert, was eine bessere Standfestigkeit bewirkt.

In einer bevorzugten Ausführung weist die Projektionswand zwei seitliche Träger auf.

Die so konstruierte Projektionswand kann z.B. mit einer Hydraulik versehen sein, welche ein einfaches Hochklappen des Schirms erlaubt und trotzdem bei Sturmwarnung und gleichzeitigem Stromausfall ein sicheres und schnelles Herunterklappen ermöglicht.

Weitere Vorteile der erfindungsgemässen Vorrichtung ergeben sich aus der folgenden Beschreibung anhand der Figuren. Dabei zeigen:
Figur 1 eine perspektivische Gesamtansicht einer Ausführung der Erfindung in Betriebsposition,
Figur 2 eine Ansicht der Vorrichtung nach Figur 1 in nach vorne heruntergeklappter Position,
Figur 3 eine Ansicht der Vorrichtung von hinten,
Figur 4 eine Seitenansicht der Vorrichtung, und
Figur 5 ein schematisches Blockdiagramm der Steuerung der Vorrichtung.

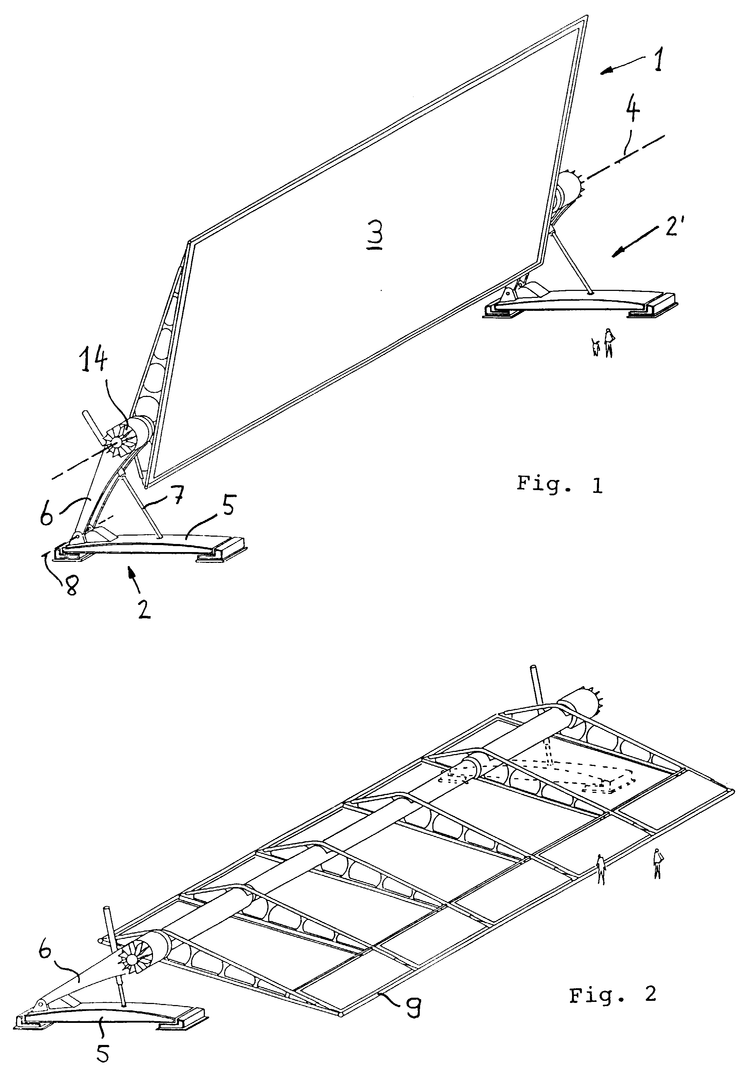

Der prinzipielle Aufbau einer bevorzugten Ausführung der Projektionswand wird aus der Figur 1 ersichtlich. Bei diesem Ausführungsbeispiel handelt es sich um eine Grossleinwand von z.B. 400 Quadratmetern Schirmfläche.

Sie besteht im wesentlichen aus einem Schirmteil 1 und zwei seitlichen Trägern 2 und 2'. Der Schirmteil weist eine starre Stützkonstruktion auf, welche die Leinwand 3 trägt. Der Schirmteil 1 ist um die gestrichelt angedeutete Kippachse 4 verkippbar.

Jeder Träger 2 und 2' umfasst einen Standteil 5, einen oberen Trägerteil 6 sowie ein längenverstellbares Stützelement 7. Der obere Trägerteil 6 ist um die gestrichelt angedeutete Trägerachse 8 gegen den Standteil 5 verkippbar.

Die Funktion der Vorrichtung wird aus den Figuren 1 und 2 ersichtlich. Figur 1 zeigt die Projektionswand in einer im wesentlichen vertikalen Betriebsposition. Aus dieser Position heraus kann der Schirmteil 1 um beide Drehrichtungen der Kippachse 4 verkippt werden. Zum Herunterklappen in die in Figur 2 gezeigte Ruhestellung wird der Schirmteil z.B. nach vorne gedreht, sodass die Leinwand 3 nach unten zu liegen kommt und vor Witterungseinflüssen geschützt ist. Zusätzlich können die Träger um die Trägerachse 8 eingeklappt werden, indem die Stützelemente 7 eingezogen werden. Somit liegt die Vorrichtung in der Ruhestellung nach Figur 2 relativ flach auf dem Boden.

Das Hochlappen der Vorrichtung kann zum Beispiel so ablaufen, dass in einer ersten Phase die Träger 2, 2' hochgeklappt werden. Geichzeitig wird der Antrieb der Kippachse 4 so gesteuert, dass die Oberkante 9 des Schirmteils den Boden entlang geführt und erst angehoben wird, wenn die Träger einen vorgegebenen Oeffungswinkel erreicht haben. Der dabei resultierende elegante Bewegungsablauf hat den Vorteil, dass die Hebelkräfte, die vom Schirmteil 1 auf die Träger 2, 2' ausgeübt werden, minimal sind.

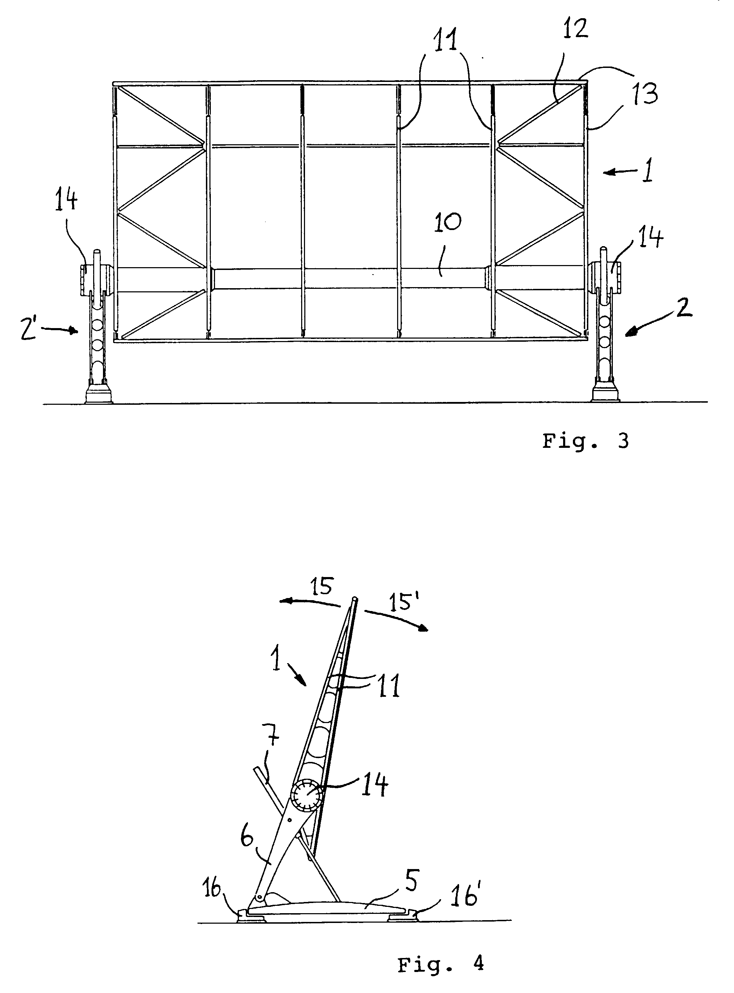

Die konstruktive Ausführung der Vorrichtung wird aus den Figuren 3 und 4 ersichtlich.

Die Stützkonstruktion des Schirmteils 1 umfasst einen torsionsfesten Achsenträger 10, mehrere Quer- und Hilfsträger 11 rsp. 12 und einen äusseren Rahmen 13. Der Achsenträger 10 ist so ausgeführt, dass er die Torsionsstabilität der ganzen Stützkonstruktion gewährleistet. Deshalb können die Quer- und Hilfsträger sowie der Rahmen sehr leicht ausgeführt werden. Damit kommt der Schwerpunkt der ganzen Stützkonstruktion tief zu liegen, was die Standfestigkeit der Vorrichtung verbessert und die Drehmomente beim Hoch- und Herunterklappen der Wand vermindert.

In jedem Träger 2, 2' ist ein Kippantrieb 14 vorgesehen, der mit dem Querträger 10 verbunden ist. Mittels dieser Antriebe kann der Schirmteil 1 um die in Figur 4 gezeigten beiden Kipprichtungen 15 und 15' gekippt werden.

Zur Verstellung der Träger werden die hydraulisch ausfahrbaren Stützelemente 7 verwendet.

Der Standteil 5 jedes Trägers ruht auf zwei Stützfüssen 16 und 16', welche eine gleichmässige Druckverteilung auf dem Boden gewährleisten. Die Halterung der Stützfüsse ist mittels Gummilagern so ausgeführt, dass sich der Standteil seitlich gegen die Stützfüsse etwas verschieben kann, um ein Durchbiegen der Vorrichtung auszugleichen.

Eine Verankerung der ganzen Vorrichtung im Boden ist nicht nötig. Da der Schwerpunkt in der Nähe der Achse 4 liegt, kann die Vorrichtung in keiner der möglichen Positionen umkippen. Die Grösse der Standteile 5 ist so gewählt, dass selbst kräftige Windstösse abgefangen werden können.

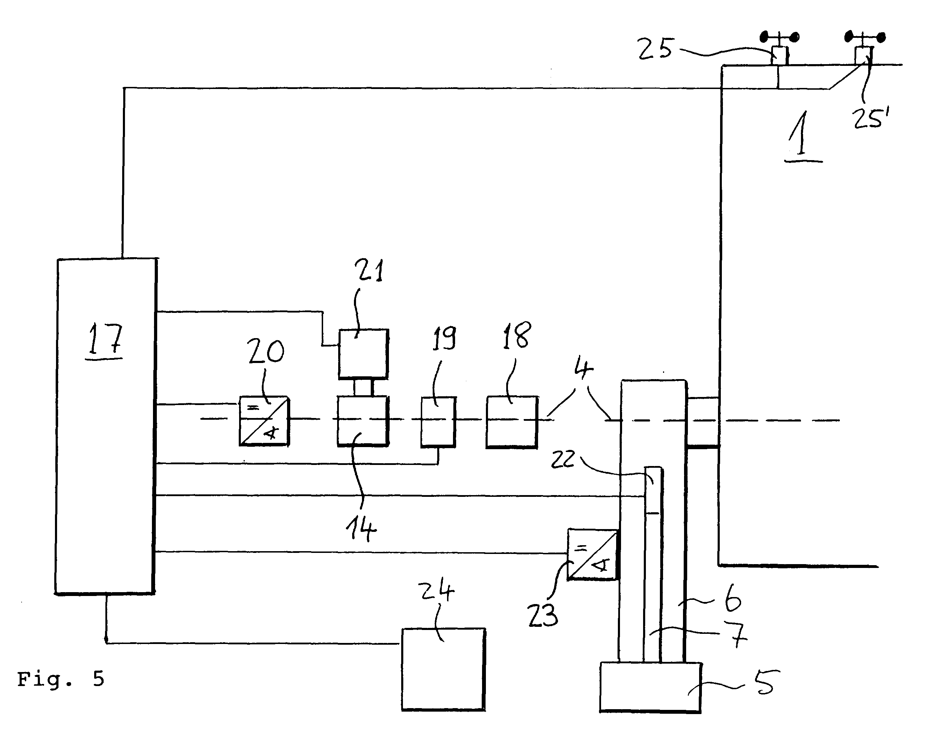

Die Steuerelemente der Vorrichtung sind aus Figur 5 ersichtlich, wobei nur die Ansteuerung eines der beiden Träger gezeigt wird. Eine Steuereinheit 17 mit numerischem Rechner kontrolliert den Zustand beider Träger und steuert die Hydraulik. Der Antrieb der Kippachse 4 umfasst den erwähnten hydraulischen Motor 14 mit Ventilen 21 und Getriebe 18. Um die Kippachse 4 festzuhalten, ist eine elektrische Bremse 19 vorgesehen. Diese blockiert die Achse, sobald sie in einer gewünschten Position ist.

Zur Ueberwachung der Achsenposition wird ein Drehgeber 20 verwendet.

Die Ventile 22 des Halteelementes 7 sind aus Sicherheitsgründen direkt auf dessen Hydraulikzylinder angeordnet. Zur Ueberwachung der Stellposition des oberen Trägertils dient ein Winkelgeber 23.

Ein Hydraulikaggregat 24 erzeugt den Betriebsdruck der hydraulischen Elemente. Zwei redundante Windmesser 25, 25' überwachen die Windgeschwindigkeit.

Die Steuerelemente sind so ausgelegt, dass der Schirmteil bei starkem Wind automatisch heruntergeklappt wird. Dazu wird die Bremse 19 z.B. bei Windgeschwindigkeiten über 45 km/h automatisch gelöst, so dass der Schirmteil 1 nur noch vom Antrieb 14 gehalten wird. Nimmt nun der Wind noch weiter zu (z.B. mit Windgeschwindigkeiten über 80 km/h), so erhöht sich der Druck in der Hydraulik des Antriebs 14 und öffnet beim Ueberschreiten eines Maximalwerts ein Sicherheitsventil. Dadurch wird der Antriebsmotor gelöst und der Wind kann den Schirmteil umdrücken, ohne ihn zu beschädigen.

Im Falle eines Stromausfalls wird die Bremse 19 ebenfalls geöffnet, damit der Schirmteil 1 manuell absenkbar bleibt und bei starkem Wind wie oben beschrieben automatisch umgedrückt wird.

Senkt sich der Boden im Bereich einer der Standfüsse 16, 16' ab, so können in der Konstruktion beträchtliche Spannungen und eine unerwünschte Kräfteverteilung entstehen. Insbesondere werden die Halteelemente 7 ungleichmässig belastet. Deshalb sind die Halteelemente ebenfalls mit Ueberdruckventilen ausgerüstet. Wenn die Kraft auf eines der Halteelemente zu gross wird, öffnet sich dessen Ueberdruckventil und das entsprechende Halteelement wird soweit abgesenkt, bis es durch das andere Halteelement genügend entlastet wird. Eine sich aus dieser Bewegung ergebende Torsion des Achsenträgers wird nötigenfalls durch eine automatische Oeffnung der Ueberdruckventile der Antriebsmotoren 14 ausgeglichen.

Für einen genauen Positionsausgleich der oberen Trägerteile sind Winkelgeber 23 vorgesehen. Mit der Steuerung 17 können die Längen der Halteelemente automatisch so eingestellt werden, dass die beiden oberen Trägerteile parallel stehen.

Da die Vorrichtung keine Verankerungen aufweist und sich selbstständig hochklappen kann, ist ihre Montage denkbar einfach. Zuerst werden die Träger 2, 2' aufgestellt und zwischen ihnen der Achsenträger 10 befestigt. Hierzu sind die Träger 2, 2' heruntergeklappt. Der Achsenträger 10 besteht zur Vereinfachung des Transports aus drei teleskopartigen Einzelelementen, welche zu einem Ganzen zusammengefügt werden können. Nach der Montage des Achsenträgers 10 an den Trägern 2, 2' werden die Querträger 11, die Hilfsträger 12 und der Rahmen 13 am Achsenträger 10 befestigt. Danach wird die Leinwand an der jetzt fertigen Stützkonstruktion aufgespannt.

Die Montage der Querträger, Hilfsträger und des Rahmes sowie das Aufspannen der Leinwand geschieht in der heruntergeklappten Stellung der Vorrichtung. Damit liegen alle zu montierenden Elemente auf einer bequemen Arbeitshöhe.

Die in der obigen Beschreibung erläuterte vorzugsweise Ausführung ist nur eine Möglichkeit, die erfindungsgemässe Projektionswand zu realisieren. In anderen Ausführungen kann z.B. die Kippachse durch einen oberen Bereich, die Mitte oder die Kanten des Schirmteils 1 verlaufen. Die Träger 2, 2' können auch starr ausgeführt sein, falls auf die Klappbarkeit um die Trägerachse 8 verzichtet werden soll. Die Zahl der Träger kann auch grösser als zwei sein, oder es kann ein einzelner zentraler Träger verwendet werden.

In jedem Fall ergibt sich aber durch die beidseitige Verschwenkbarkeit des Schirmteils die Möglichkeit, Windstössen von allen Seiten nötigenfalls auszuweichen und die Wand bei Bedarf jederzeit herunterzuklappen.

## Patentansprüche

1. Projektionswand (1,2,2') insbesondere für Freilichtaufführungen, welche einen im wesentlichen starren verkippbaren Schirmteil (1) zur Aufnahme eines zu projizierenden Bildes und mindestens einen Träger (2, 2') aufweist, wobei der Schirmteil (1) aus einer im wesentlichen vertikalen Betriebsposition gegenüber dem Träger um eine horizontale Kippachse (4) beidseits (15,15') verkippbar ist, und wobei der Träger den Schirmteil (1) in der Kippachse (4) trägt, dadurch gekennzeichnet, dass jeder Träger (2, 2') einen oberen Trägerteil (6) und einen Standteil (5) aufweist, wobei der obere Trägerteil (6) in der Kippachse (4) mit dem Schirmteil (1) verbunden und gegenüber dem Standteil (5) um eine Trägerachse (8) verkippbar ist, welche Trägerachse parallel zur Kippachse (4) liegt.

2. Projektionswand nach Anspruch 1, dadurch gekennzeichnet, dass der Schirmteil (1) beidseits mindestens in eine horizontale Position verkippbar ist.

3. Projektionswand nach einem der vorangehenden Ansprüche, dadurch gekennzeichnet, dass der Schirmteil (1) eine von einer Stützkonstruktion (10-13) gehaltene Schirmfläche (3) aufweist, wobei die Stützkonstruktion (10-13) entlang der Kippachse einen im wesentlichen torsionsfesten Achsenträger (10) aufweist.

4. Projektionswand nach einem der vorangehenden Ansprüche, dadurch gekennzeichnet, dass sie mindestens einen direkt auf die Kippachse (4) wirkenden Kippantrieb (14) aufweist.

5. Projektionswand nach einem der vorangehenden Ansprüche, dadurch gekennzeichnet, dass sie zwei seitliche Träger (2, 2') aufweist.

6. Projektionswand nach einem der vorangehenden Ansprüche, dadurch gekennzeichnet, dass der Standteil (5) jedes Trägers (2, 2') im wesentlichen horizontal und quer zur Trägerachse (8) angeordnet ist und dass zwischen Standteil (5) und oberem Trägerteil (6) ein längenverstellbares Stützelement (7) zum Verkippen des oberen Trägerteils (6) angeordnet ist.

7. Projektionswand nach den Ansprüchen 4 und 6, dadurch gekennzeichnet, dass zum Antreiben des Kippantriebs (14) und/oder des Stützelements (7) eine Hydraulik (14, 17, 18, 21, 24) vorgesehen ist, wobei die Hydraulik derart ausgestaltet ist, dass durch Erreichen eines maximalen Winddrucks auf den Schirmteil (1) ein Ueberdruckventil auslösbar und dadurch der Schirmteil (1) absenkbar ist.

8. Projektionswand nach Anspruch 7, dadurch gekennzeichnet, dass mindestens ein Bremselement (19) zum Feststellen des Kippantriebs (14) vorgesehen ist.

## Claims

1. Projection wall, in particular for open air presentations, which comprises a substantially rigid, tiltable screen section (1), for receiving a picture to be projected, and at least one support (2, 2'), wherein the screen section (1) can be titled in respect to the support about a horizontal tilting axis (4) into both directions (15, 15') from a substantially vertical operation position, and wherein the support caries the screen section (1) in the tilting axis (4), characterized in that each support (2, 2') comprises an upper support section (6) and a foot section (5), wherein the upper support section (6) is connected in the tilting axis (4) to the screen section (1) and can be tilted about a support axis (8) in respect to the foot section (5), wherein the support axis lies parallel to the titling axis (4).

2. Projection wall of claim 1, characterized in that the screen section (1) can be titled in both directions at least into a horizontal position.

3. Projection wall of one of the preceding claims, characterized in that the screen section (81) comprises a screen surface (3) held by a support construction (10 - 13), wherein the support construction (10 - 13) comprises a substantially torsion-proof axis girder (10) along the tilting axis.

4. Projection wall of one of the preceding claims characterized in that it comprises at least one titling drive (14) acting directly on the tilting axis (4).

5. Projection wall of one of the preceding claims characterized in that it comprises two lateral supports (2, 2').

6. Projection wall of one of the preceding claims characterized in that the foot section (5) of each support (2, 2') is arranged substantially horizontally and transversely to the support axis (8), and that a length-adjustable support element (7) is arranged between the foot section (5) and the upper support section (6) for tilting the upper support section (6).

7. Projection wall of the claims 4 and 6, characterized in that hydraulics (14,17,18,21,22) are provided for driving the tilting drive (14) and/or the support element (7), wherein the hydraulics are designed such that upon reaching of a maximum wind pressure onto the screen section an excess-pressure valve can be released and the screen section (1) can thereby be lowered.

8. Projection wall of claim 7, characterized in that at least one breaking element (19) for locking the tilting drive (14) is provided.

## Revendications

1. Ecran de projection (1, 2, 2'), en particulier pour représentation en plein air, comportant une partie-écran (1) essentiellement rigide pour recevoir une image projetée, ainsi qu'au moins un support (2, 2'), la partie-écran (1) pouvant être basculée par rapport au support dans les deux sens (15, 15') à partir d'une position d'utilisation essentiellement verticale et autour d'un axe de basculement (4) horizontal, le support supportant la partie-écran (1) à l'axe de basculement (4), caractérisé en ce que le support (2, 2') comporte un élément porteur supérieur (6) et un socle (5), l'élément porteur supérieur (6) étant relié à la partie-écran (1) par l'axe de basculement (4) et pouvant être basculé par rapport au socle (5) autour d'un axe porteur (8) parallèle à l'axe de basculement (4).

2. Ecran de projection selon la revendication 1, caractérisé en ce que la partie-écran (1) peut basculer dans les deux sens au moins jusqu'à l'horizontale.

3. Ecran de projection selon une des revendications précédentes, caractérisé en ce que la partie-écran (1) comporte une surface-écran (3) maintenue par un châssis (10 - 13) comportant une poutre axiale (10) essentiellement résistante à la torsion.

4. Ecran de projection selon une des revendications précédentes, caractérisé en ce qu'il comporte au moins un dispositif d'entraînement en rotation (14) attaquant directement l'axe de basculement (4).

5. Ecran de projection selon une des revendications précédentes, caractérisé en ce qu'il comporte deux supports latéraux (2, 2').

6. Ecran de projection selon une des revendications précédentes, caractérisé en ce que le socle (5) de chaque support (2, 2') est essentiellement disposé à l'horizontale et perpendiculairement à l'axe porteur (8) et en ce qu'un organe d'appui (7) de longueur variable est agencé entre le socle (5) et l'élément porteur supérieur (6) pour le basculement de celui-ci.

7. Ecran de projection selon les revendications 4 et 6, caractérisé en ce qu'un système hydraulique (14, 17, 18, 21, 20) est prévu pour actionner le dispositif d'entraînement en rotation (14) et/ou l'organe d'appui (7), le système hydraulique étant agencé de façon à ce que lorsque le vent exerce une pression maximale sur la partie-écran (1) une soupape de sécurité puisse être actionnée et provoquer l'abaissement de la partie-écran.

8. Ecran de projection selon la revendication 7, caractérisé par au moins un frein (19) pour arrêter le dispositif d'entraînement en rotation (14).
